**Europäisches Patentamt**

**European Patent Office**

**Office européen des brevets**

(11) Numéro de publication: **0 281 431**
**A1**

(12) ## DEMANDE DE BREVET EUROPEEN

(21) Numéro de dépôt: 88400083.7

(22) Date de dépôt: 15.01.88

(51) Int. Cl.⁴: **A 23 C 9/154**

(30) Priorité: 16.01.87 FR 8700486

(43) Date de publication de la demande:
07.09.88 Bulletin 88/36

(84) Etats contractants désignés:
BE DE ES FR GB GR IT NL

(71) Demandeur: **VALMONT S.A.**
**Z.I. Des Parages**
**F-82000 Montauban (FR)**

(72) Inventeur: **Dieu, Bernard**
**20, rue du Levant Sebazac**
**F-12850 Onet le Chateau (FR)**

**Cuq, Jean**
**8, rue Beauregard Sebazac**
**F-12850 Onet le Chateau (FR)**

(74) Mandataire: **Chereau, Louis**
**NOVAPAT-CABINET CHEREAU 63bis, Boulevard**
**Bessières**
**F-75017 Paris (FR)**

(54) **Procédé pour la fabricaton d'un entremet longue conservation à base de lait et d'oeufs.**

(57) Procédé de fabrication d'un entremet dit "crème anglaise" par mélange du lait avec un concentré d'oeufs entiers obtenu à l'àide d'une ultrafiltration ou d'une évaporation sous faible pression, ce mélange subissant une stérilisation par montée en température au-delà de 100°C pendant quelques secondes sous l'effet d'une injection directe de vapeur de façon à stériliser le produit sans qu'il y ait cuisson prolongée de l'albumine, refroidissement instantané par évaporation sous vide partiel puis homogénéisation et conditionnement aseptiques.

Avantage: Conservation du produit sans altération de sa qualité pendant plusieurs mois à température dirigée de 15° C à 25° C.

Fig unique

## Description

La présente invention a pour objet un procédé de fabrication d'un entremet longue conservation. On connaît un entremet dénommé "crème anglaise" réalisé par cuisson de jaunes d'oeufs dans du lait en association avec des ingrédients annexes tels que sucre, colorant, arôme. Cet entremet ne présente des qualités de conservation que de faible durée très voisine de la durée de conservation du lait c'est-à-dire quelques jours si celui-ci est maintenu au frais et une durée encore plus brève s'il est maintenu à température ambiante.

Le brevet français n° 80 22 309 décrit un procédé de fabrication d'un produit à base d'oeufs concentrés dont les propriétés bactériologiques sont très intéressantes car la proportion de germes y est très faible. De plus, jaunes et blancs sont intimement liés jusqu'à obtenir un produit de consistance visqueuse.

Ce concentré d'oeufs est réalisé à partir d'oeufs entiers que l'on fait passer dans un dispositif d'ultrafiltration permettant de retirer une certaine quantité d'eau ainsi qu'éventuellement dans un dispositif d'évaporation pour retirer une quantité d'eau complémentaire.

Ce concentré d'oeufs est réalisé à partir d'oeufs entiers et il est actuellement disponible dans le commerce.

La présente invention a pour objet un procédé de fabrication de crème anglaise dont la durée de conservation est de plusieurs mois. Ce procédé utilise en combinaison les oeufs concentrés et un type de stérilisation particulier permettant la fabrication de ce produit.

Cet entremet peut alors être produit en grande quantité et commercialisé ce qui était exclu antérieurement.

Il est possible d'utiliser des oeufs autres que concentrés, tels que des oeufs frais, congelés ou en poudre. Cependant, la conservation des qualités organoleptiques du produit est nettement inférieure.

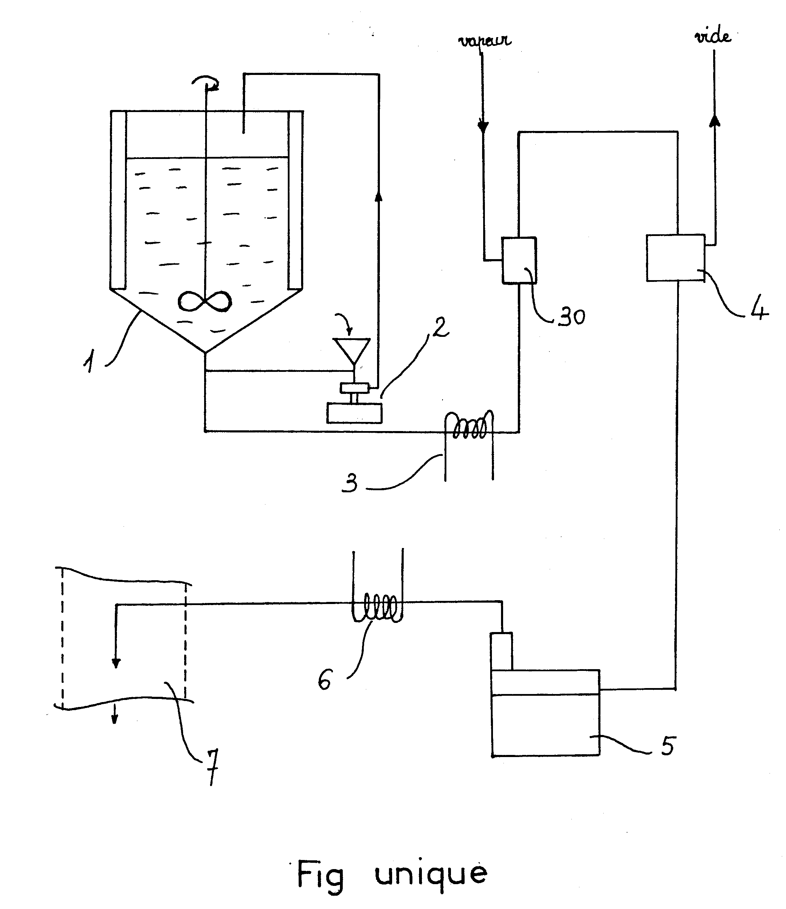

L'invention sera mieux comprise à la lecture de la description d'un mode de réalisation particulier qui va suivre en relation avec la figure unique qui représente un dispositif associé qui permet la mise en oeuvre du procédé.

Le lait est introduit dans une cuve de mélange 1 où il est constamment agité. Le lait s'entend de tous les laits qu'ils soient reconstitués, écrémés ou qu'ils aient subi un pré-traitement de stérilisation et qu'elle qu'en soit l'origine. Le lait est réchauffé à une température comprise entre 10 et 40°C plus particulièrement 30°C.

C'est à ce stade qu'on va introduire dans la cuve au moins des ingrédients complémentaires généralement sous forme pulvérulente tels que le sucre, l'amidon modifié, les stabilisants parmi lesquels on peut citer carraghénane et xanthane ainsi que les colorants. Cette introduction est réalisée par un appareil mélangeur 2 branché en dérivation sur la cuve de mélange. C'est le même appareil de mélange qui sert à l'introduction des oeufs sous forme concentrée dans la cuve du mélangeur puisque ce concentré d'oeufs a l'aspect d'une pâte visqueuse.

La composition homogène ainsi obtenue est alors préchauffée rapidement en 3 à une température comprise entre 60 et 90° C, de préférence à environ 80° C puis stérilisée en 30 par injection directe de vapeur qui élève instantanément la température du produit à 150° C. Ce produit reste à 150° C quelques secondes seulement puis il est ramené instantanément à une température comprise entre 60 et 90° C, de préférence à 80° C par évaporation sous vide partiel en 4 de l'eau incorporée sous forme de vapeur, eau qui est alors éliminée.

Le produit est par cette étape stérilisé par la température en supprimant toute cuisson prolongée de l'albumine de l'oeuf qui pourrait provoquer un dissociation de ce dernier.

L'étape suivante est une étape d'homogénéisation 5 du produit en sortie de stérilisation avant qu'il ne soit refroidi en 6 de façon à ramener sa température de 60 à 90° C à 15 à 30° C, en utilisant un échangeur de chaleur.

Le poste de conditionnement 7 devra être aseptique de façon à conserver au produit toutes ses qualités stériles.

Une fois conditionné le produit peut être conservé à la température ambiante et non au froid mais de façon préférentielle à température dirigée de 15° C à 25° C. Ainsi la qualité du produit n'est pas altérée et sa durée de conservation est prolongée, en moyenne six mois.

On prépare le mélange du lait à une température compris entre 10 et 40° C. Puis sont effectués un préchauffage rapide éventuel à une température comprise entre 60 et 90° C, une période courte de stérilisation et un refroidissement ci-après, les paramètres de ces étapes sont choisis pour éviter la précipitation des composants pendant la préparation et le traitement de ladite crème.

Grace au préchauffage rapide du mélange avant stérilisation, le volume de vapeur qui est nécessaire pour la stérilisation peut être réduit si bein qu'il n'en résulte pas une dilution importante du mélange.

La présente invention n'est pas limitée aux exemples de réalisation qui viennent d'être décrits, elle est au contraire susceptible de modifications et de variantes qui apparaîtront à l'homme de l'art.

C'est ainsi que la température de stérilisation de 150° C est donnée à titre indicatif, mais elle peut varier entre 100° C et 160° C.

## Revendications

1 - Procédé de fabrication d'un entremet dit "crème anglaise" comprenant du lait, des oeufs et des ingrédients complémentaires tels que du sucre, de l'amidon modifié, des arômes, des colorants, des stabilisants, caractérisé en ce que pour donner à cet entremet des propriétés de conservation on applique les étapes suivantes :

- mélange du lait avec des oeufs et au moins un des ingrédients dans un mélangeur,

- préchauffage rapide du mélange à une température comprise entre 60 et 90° C,

- stérilisation par montée en température au-delà de 100° C pendant quelques secondes sous l'effet d'une injection directe de vapeur pour obtenir une stérilisation sans cuisson prolongée,

- refroidissement instantané par évaporation sous vide partiel de l'eau injectée sous forme de vapeur,

- homogénéisation aseptique,

- conditionnement aseptique.

2 - Procédé selon la revendication 1, caractérisé en ce que les oeufs utilisés sont des oeufs sous forme concentrée par ultrafiltration ou évaporation.

3 - Procédé selon la revendication 1, caractérisé en ce que la température de stérilisation est comprise entre 100° C et 160° C.

4. - Procéde selon la revendication 1 ou 2, caractérisé en ce que le temps de stérilisation est compris entre une et dix secondes.

5. - Procédé selon la revendication 1, caractérisé en ce que le mélange de lait est refroidit à partir de la température de stérilisation à une température intermédiaire comprise entre 60 et 90° C, sous vide.

6. - Procédé selon la revendicaiton 5, caractérisé en ce que le mélange de lait subit un traitement d'homogénéisation entre le refroidissement sous vide et le refroidissement par échangeur de chaleur.

0281431

vapeur

vide

30

4

1

2

3

6

7

5

Fig unique

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| Y | US-A-3 166 424 (R. STEWART)<br>* Revendications 1,2; colonne 1, ligne 68 - colonne 3, ligne 40 *<br>--- | 1-4 | A 23 C 9/154 |
| Y | FR-A-2 008 966 (ALLIED CHEMICAL CO.)<br>* Revendications 1-10; page 3, ligne 16 - page 4, ligne 15; page 4, lignes 26-29; exemple 1 *<br>--- | 1-4 | |
| A | EP-A-0 179 946 (SOC. DES PRODUITS NESTLE)<br>* Revendications 1,8-11; exemples 1,5 *<br>--- | 1-5 | |
| A | FR-A-2 296 376 (PIERREFITTE-AUBY)<br>* Revendications 1-4; page 3, ligne 5 *<br>--- | 1,3 | |
| D,A | EP-A-0 051 757 (R. LIOT)<br>* Revendication 1; exemples 4-7 * &<br>FR-A-2 492 226, & FR-A-8 022 309<br>--- | 2 | |
| A | US-A-3 666 497 (A. STEWART)<br>* Revendication 1; exemples 1,4 *<br>--- | 1,3-6 | DOMAINES TECHNIQUES RECHERCHES (Int. Cl.4) |
| A | SULZER TECHNICAL REVIEW, vol. 46, no. 2, 1964, pages 93-97; W. REGEZ: "Uperisation as it stands today"<br>* Page 94 *<br>----- | 1,3-6 | A 23 C<br>A 23 B<br>A 23 L |

**Le présent rapport a été établi pour toutes les revendications**

| Lieu de la recherche | Date d'achèvement de la recherche | Examinateur |
|---|---|---|
| LA HAYE | 25-04-1988 | DESMEDT G.R.A. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

....................................................................
& : membre de la même famille, document correspondant

EPO FORM 1503 03.82 (P0402)